# EUROPEAN PATENT APPLICATION

(11) **EP 4 682 781 A1**
(43) Date of publication of application: **21.01.2026**
(21) Application number: 24770549.4
(22) Date of filing: 29.02.2024
(51) Int. Cl.: G06N 20/00, G06F 3/0481, G06F 3/04842, G06F 16/907

(54) **INFORMATION PROCESSING DEVICE, PROGRAM, AND METHOD**

(30) Priority: 14.03.2023 JP 2023040044
(71) Applicant: OMRON Corporation, Kyoto 600-8530 (JP)
(72) Inventor: YAMADA, Hiroomi, Kyoto-shi, Kyoto 600-8530 (JP)
(74) Representative: Appelt, Christian W.
(86) International application number: PCT/JP2024/007547
(87) International publication number: WO 2024/190438

(57) **Abstract**

Provided are an information processing device, a program and a method that enable a user to conveniently check the correspondence between target data and a feature based on the target data. A program causes a computer to execute acquiring a plurality of pieces of target data, acquiring a plurality of features based on the plurality of pieces of target data, receiving selection of at least one feature among the plurality of features, and generating a display screen including a target data display area in which the plurality of pieces of target data are displayed and a feature display area in which the plurality of features are displayed, the display screen displaying a set of the at least one selected feature and at least associated one of the plurality of pieces of target data in a manner identifiable to a user.

## Description

### TECHNICAL FIELD

The present invention relates to an information processing device, a program, and a method.

### BACKGROUND ART

In machine learning, training using a dataset and a learning model, verification and evaluation of a trained model, and the like are performed. Specifically, preprocessing is first performed on the dataset, and the dataset is divided into a dataset for the training and a dataset for the verification and evaluation. In the preprocessing, labeling or the like is performed on the dataset (see Patent Document 1). By appropriately executing the labeling, it is possible to distinguish between valid data and invalid data, and to generate a highly accurate learning model.

### CITATION LIST

### PATENT LITERATURE

Patent Document 1: JP 2019-105979 A

### SUMMARY

### TECHNICAL PROBLEM

On the other hand, since the labeling cannot be automated, a tool for efficiently performing the labeling is required. For example, since a feature extracted from certain data (target data) is information obtained by extracting information included in the target data, a feature corresponding to different target data may be close to the feature extracted from the target data. As described above, it is difficult for a user to recognize the state of actual data only from a feature, and there is room for improving the efficiency of labeling of the feature by the user.

In one aspect, the present disclosure has been made in view of such circumstances, and an object thereof is to provide an information processing device, a program, and a method that enable a user to conveniently check the correspondence between target data and a feature based on the target data.

### SOLUTION TO PROBLEM

In order to solve the problems described above, the present disclosure employs the following configurations.

An information processing device according to an aspect of the present disclosure includes a target data acquisition unit configured to acquire a plurality of pieces of target data, a feature acquisition unit configured to acquire a plurality of features corresponding to the plurality of pieces of target data, a selection reception unit configured to receive selection of at least one feature among the plurality of features, and a screen generation unit configured to generate a display screen including a target data display area in which the plurality of pieces of target data are displayed and a feature display area in which the plurality of features are displayed, the display screen displaying a set of the at least one selected feature and at least one of the plurality of pieces of target data in a manner identifiable to a user, the at least one piece of target data corresponding to the at least one feature.

According to the information processing device, the target data and the feature are acquired, and the selection of the feature is received. On the display screen including the target data display area in which the target data is displayed and the feature display area in which the features are displayed, the selected feature and the target data corresponding to the selected feature are displayed in an identifiable manner. Accordingly, the user operating the information processing device can check the correspondence between the feature and the target data on one screen. This improves the convenience for the user in checking the correspondence.

In the information processing device according to the aspect, the screen generation unit may generate the display screen further including a selection display area in which information indicating the at least one selected feature is displayed.

According to the information processing device, the user can recognize the selected feature by checking the selection display area on the display screen. This improves the convenience for the user in checking the correspondence.

In the information processing device according to the aspect, the screen generation unit may display, in the feature display area, a plurality of objects corresponding to the plurality of features, the plurality of objects being selectable based on operation input in the feature display area, and, on the display screen, an object selected in the feature display area among the plurality of objects may be disposed in the selection display area, and thus the selection reception unit may receive the selection of the at least one feature.

According to the information processing device, the user can select the feature by selecting the object in the feature display area and disposing the object in the selection display area. Since the user can select the feature by an intuitive operation, the convenience for the user in checking the correspondence is improved.

In the information processing device according to the aspect, the screen generation unit may generate the display screen displaying the set in a common display mode, and thus displaying the set in an identifiable manner.

According to the information processing device, since the display mode is common, the user can check the correspondence between the target data and the feature in a list-like manner, for example, even when the target data or the feature is displayed using a large number of points. This improves the convenience for the user.

The information processing device according to the aspect may further include a labeling information reception unit configured to receive, from the user, labeling information for the at least one feature.

According to the information processing device, the user can perform labeling on the feature while checking the target data corresponding to the feature, and thus the convenience for the user in labeling is improved.

In the information processing device according to the aspect, the target data may include time-series data.

According to the information processing device, the convenience of checking the correspondence of the target data having a property of being displayed in a time series with the feature is improved.

In the information processing device according to the aspect, the target data may include image data.

According to the information processing device, the convenience of checking the correspondence of the image data with the feature is improved.

A program according to an aspect of the present disclosure causes a computer to execute acquiring a plurality of pieces of target data, acquiring a plurality of features corresponding to the plurality of pieces of target data, receiving selection of at least one feature among the plurality of features, and generating a display screen including a target data display area in which the plurality of pieces of target data are displayed and a feature display area in which the plurality of features are displayed, the display screen displaying a set of the at least one selected feature and at least associated one of the plurality of pieces of target data in a manner identifiable to a user.

An information processing method according to an aspect of the present disclosure is an information processing method executed by a computer, the information processing method including acquiring a plurality of pieces of target data, acquiring a plurality of features corresponding to the plurality of pieces of target data, receiving selection of at least one feature among the plurality of features, and generating a display screen including a target data display area in which the plurality of pieces of target data are displayed and a feature display area in which the plurality of features are displayed, the display screen displaying a set of the at least one selected feature and at least associated one of the plurality of pieces of target data in a manner identifiable to a user.

### ADVANTAGEOUS EFFECTS OF INVENTION

According to the present invention, it is possible to provide an information processing device, a program, and a method that enable a user to conveniently check the correspondence between target data and a feature based on the target data.

### BRIEF DESCRIPTION OF THE DRAWINGS

FIG. 1 is a block diagram of an information processing device according to the present embodiment.
FIG. 2 is a diagram of an example of a hardware configuration of the information processing device according to the present embodiment.
FIG. 3 is a flowchart for describing an example of processing of the information processing device according to the present embodiment.
FIG. 4 is a diagram illustrating an example of a display screen according to the present embodiment.
FIG. 5 is a diagram illustrating an example of the display screen according to the present embodiment.
FIG. 6 is a diagram illustrating an example of the display screen according to the present embodiment.
FIG. 7 is a diagram illustrating an example of the display screen according to the present embodiment.
FIG. 8 is a diagram illustrating an example of the display screen according to the present embodiment.
FIG. 9 is a flowchart illustrating an example of labeling information reception processing according to the present embodiment.
FIG. 10 is a diagram illustrating an example of input of labeling information on the display screen according to the present embodiment.
FIG. 11 is a diagram illustrating an example of the input of the labeling information on the display screen according to the present embodiment.
FIG. 12 is a diagram illustrating another example of the display screen according to the present embodiment.

### DESCRIPTION OF EMBODIMENTS

Hereinafter, the present invention will be described in the form of embodiments of the invention, but the invention according to the claims is not limited to the following embodiments. In addition, not all of the configurations described in the embodiments are essential to solve the problem. The following description will be given while acquiring the accompanying drawings.

In the drawings, components denoted by the same reference signs have the same or similar configurations. In the present specification, the term "or" can include the meaning of "or" in addition to the meaning of "and".

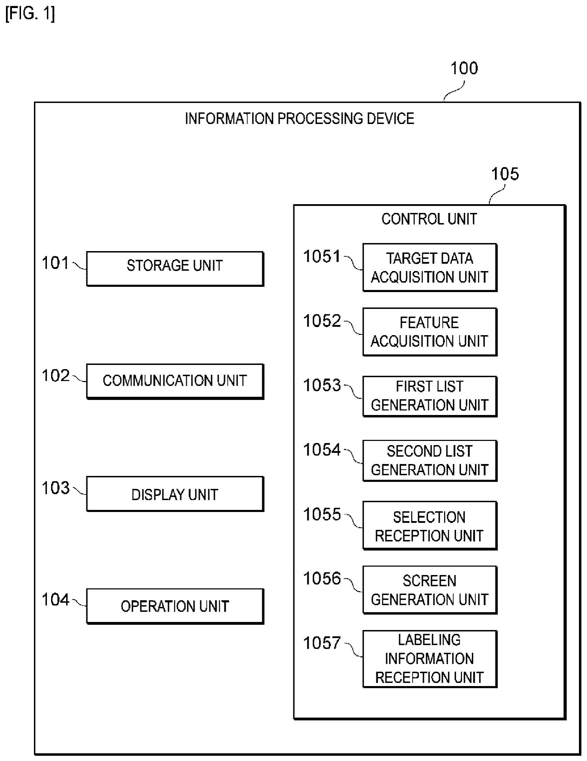

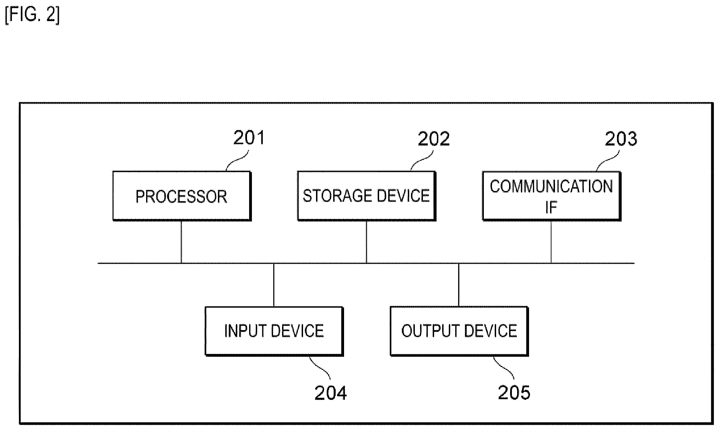

With reference to FIG. 1, an example of a configuration of an information processing device 100 will be described. In an example illustrated in FIG. 2, the information processing device 100 includes a storage unit 101, a communication unit 102, a display unit 103, an operation unit 104, and a control unit 105.

With reference to FIG. 2, an example of a hardware configuration of the information processing device 100 will be described. The information processing device 100 includes a processor 201 such as a central processing unit (CPU) or a graphical processing unit (GPU), a storage device 202 such as a memory, a hard disk drive (HDD), or a solid state drive (SSD), a communication interface (IF) 203 that performs wired or wireless communication, an input device 204 that receives an input operation, and an output device 205 that outputs information.

The storage unit 101 can be implemented by using the storage device 202 included in the storage unit 101. The control unit 105 can be implemented by the processor 201 of the information processing device 100 executing a program stored in the storage device 202. The program can be stored in a storage medium. The storage medium storing the program may be a non-transitory computer readable medium. The non-transitory storage medium is not particularly limited, and may be, for example, a storage medium such as a USB flash drive or a CD-ROM.

The storage unit 101 may be implemented by one device or may be implemented by a plurality of devices each having a function of the corresponding unit. For example, the information processing device 100 may be implemented by a general-purpose desktop personal computer (PC), a tablet PC, or the like, in addition to an information processing device designed exclusively for a service to be provided. The function of the control unit 105 of the information processing device 100 may be implemented by a program installed in another information processing device such as a server communicable with a terminal through a network.

Referring back to FIG. 1, each unit of the information processing device 100 will be described below.

The storage unit 101 stores a program executed for processing by the control unit 105 or various types of information used in the information processing device 100.

The communication unit 102 is configured as, for example, an information processing unit that performs connection and data exchange with another system or information processing device connected to the information processing device 100 through a network.

The display unit 103 is a device for performing output such as a display, and can be implemented using the output device 205 included in the information processing device 100.

The operation unit 104 is a device for performing user input such as a keyboard, a mouse, or a touch panel, and can be implemented using the input device 204 included in the information processing device 100.

The control unit 105 includes a target data acquisition unit 1051, a feature acquisition unit 1052, a first list generation unit 1053, a second list generation unit 1054, a selection reception unit 1055, a screen generation unit 1056, and a labeling information reception unit 1057.

The target data acquisition unit 1051 acquires a plurality of pieces of target data. Here, the target data in the present embodiment is data from which a feature is extracted, and examples thereof include time-series data and image data. The target data may be referred to as raw data. The target data acquisition unit 1051 acquires the target data by, for example, reading data stored in the storage unit 101.

The feature acquisition unit 1052 acquires a plurality of features corresponding to the plurality of pieces of target data. In addition, one piece of target data or a plurality of pieces of target data may correspond to one feature. Here, the "feature" is a term including information included in the time-series data to be processed, and examples thereof include a maximum value, a minimum value, a median value, a mean value, a standard deviation, a variance, and the like of the time-series data to be processed. The "feature" can include the target data itself. The feature acquisition unit 1052 acquires the features by, for example, reading the features based on the target data stored in the storage unit 101. The extraction of the features from the target data may be performed by the information processing device 100 or may be performed by another information processing device different from the information processing device 100.

The first list generation unit 1053 generates a first list indicating variables included in the target data. The first list includes, for example, information on variables and column labels assigned to the variables.

The second list generation unit 1054 generates a second list including information on features and column labels assigned to the features.

The selection reception unit 1055 receives selection of at least one feature among the plurality of features. The selection reception unit 1055 receives the selection of the feature from the user through a display screen generated by the screen generation unit 1056 described below, for example. The selection reception unit 1055 may receive the selection of the feature based on setting information for setting the feature to be selected in advance.

The screen generation unit 1056 generates a display screen that includes a target data display area in which the plurality of pieces of target data are displayed and a feature display area in which the plurality of features are displayed, and that displays a set of at least one feature selected through the selection reception unit 1055 and at least one piece of target data corresponding to the at least one feature in a manner that the user can identify the set. The display screen generated by the screen generation unit 1056 will be described below.

The labeling information reception unit 1057 receives, from the user, labeling information for the feature. The labeling information reception unit 1057 may store the received labeling information in the storage unit 101 in association with the feature. The labeling information reception unit 1057 may receive, from the user, labeling information for a variable of the target data. In this case, the labeling information reception unit 1057 may store the received labeling information in the storage unit 101 in association with the variable.

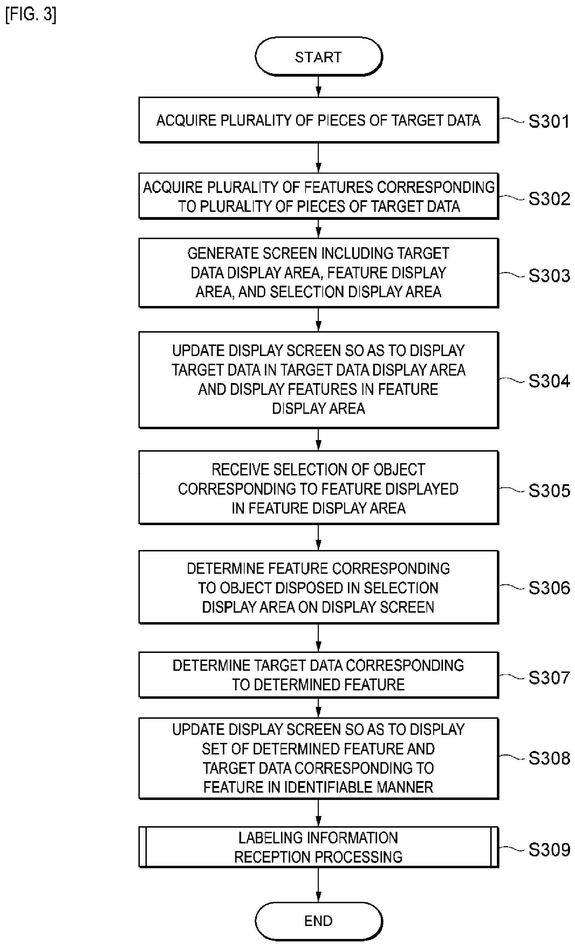

The selection of the feature and processing of displaying the target data and the feature in the information processing device 100 will be described with reference to FIGS. 3 to 8. Note that the display processing is an example of the information processing method of the present disclosure.

In step S301, the target data acquisition unit 1051 acquires a plurality of pieces of target data. The target data acquisition unit 1051 acquires, as the target data, time-series data having a plurality of variables from, for example, data stored in the storage unit 101. The first list generation unit 1053 generates a first list based on the acquired target data.

In step S302, the feature acquisition unit 1052 acquires a plurality of features corresponding to the plurality of pieces of target data acquired by the target data acquisition unit 1051. The feature acquisition unit 1052 acquires, for example, features stored in the storage unit 101 in advance. The second list generation unit 1054 generates a second list based on the acquired features.

In step S303, the screen generation unit 1056 generates a display screen including a target data display area, a feature display area, and a selection display area.

In step S304, the screen generation unit 1056 updates the display screen so as to display the target data in the target data display area and display the features in the feature display area.

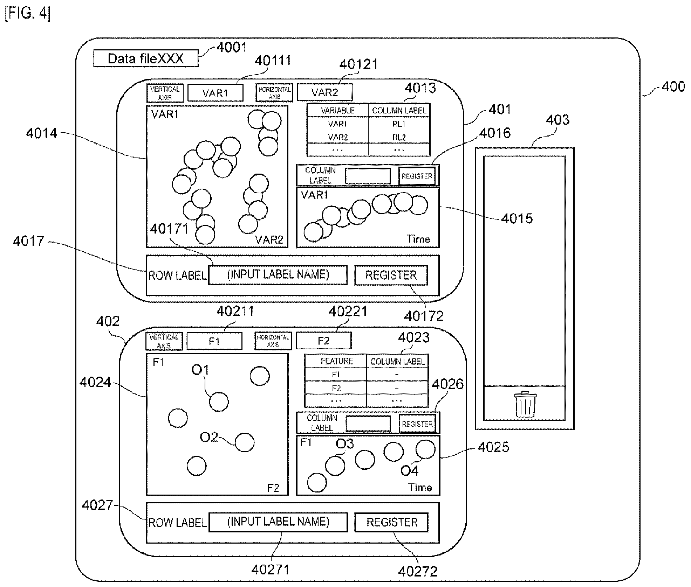

Here, an example of a display screen 400 generated by the screen generation unit 1056 and displayed to the user through the display unit 103 will be described with reference to FIG. 4.

The display screen 400 includes a target data display area 401, a feature display area 402, and a selection display area 403. The target data display area 401 includes a data display portion 4001. In the data display portion 4001, information indicating underlying target data acquired by the target data acquisition unit 1051 is displayed. In the example of FIG. 4, information "Date fileXXX" indicating a date file is displayed.

The target data display area 401 displays the target data in the form of a scatter diagram. The target data display area 401 includes a vertical axis variable selection field 40111, a horizontal axis variable selection field 40121, a first list 4013, a two-dimensional scatter diagram display area 4014, a time axis scatter diagram display area 4015, a column label input area 4016, a row label input area 4017, a row label input field 40171, and a registration button 40172.

The vertical axis variable selection field 40111 is an area that enables the user to select a variable displayed on the vertical axis in the two-dimensional scatter diagram display area 4014 and displays the selected variable. In the example of FIG. 4, "VAR1" is selected as the variable of the vertical axis. The variable selected in the vertical axis variable selection field 40111 is displayed as a variable of the vertical axis in a time axis scatter diagram in which the horizontal axis is a time axis in the time axis scatter diagram display area 4015.

The horizontal axis variable selection field 40121 is an area that enables the user to select a variable displayed on the horizontal axis in the two-dimensional scatter diagram display area 4014 and displays the selected variable. In the example of FIG. 4, "VAR2" is selected as the variable on the horizontal axis.

The first list 4013 is a list indicating a plurality of variables included in the target data based on the data display portion 4001. The first list 4013 indicates variables that can be selected by the user in the vertical axis variable selection field 40111 and the horizontal axis variable selection field 40121.

The two-dimensional scatter diagram display area 4014 is an area for displaying a scatter diagram plotted based on the variable selected as the variable on the vertical axis and the variable selected as the variable on the horizontal axis.

The time axis scatter diagram display area 4015 is a scatter diagram in which the variable selected as the variable on the vertical axis is plotted with the horizontal axis as the time axis.

The column label input area 4016 receives an input of a column label for each variable displayed in the first list 4013. The first list 4013 is updated based on the column label input to the column label input area 4016.

The row label input area 4017 receives an input of a row label for target data from the user. The user can update the row label corresponding to the target data in the storage unit 101 by inputting the row label in the row label input field 40171 and selecting the registration button 40172.

The feature display area 402 displays the features in the form of a scatter diagram. The feature display area 402 includes a vertical axis feature selection field 40211, a horizontal axis feature selection field 40221, a second list 4023, a two-dimensional scatter diagram display area 4024, a time axis scatter diagram display area 4025, a column label input area 4026, a row label input area 4027, a row label input field 40271, and a registration button 40272.

The vertical axis feature selection field 40211 is an area that enables the user to select a feature displayed on the vertical axis in the two-dimensional scatter diagram display area 4024 and displays the selected feature. In the example of FIG. 4, "F1" is selected as the feature of the vertical axis. The feature selected in the vertical axis feature selection field 40211 is displayed as a feature of the vertical axis in a time axis scatter diagram in which the horizontal axis is a time axis in the time axis scatter diagram display area 4025.

The horizontal axis feature selection field 40221 is an area that enables the user to select a feature displayed on the horizontal axis in the two-dimensional scatter diagram display area 4024 and that displays the selected feature. In the example of FIG. 4, "F2" is selected as the feature on the horizontal axis.

The second list 4023 is a list indicating a plurality of features included in the features based on the data display portion 4001. The second list 4023 indicates features that can be selected by the user in the vertical axis feature selection field 40211 and the horizontal axis feature selection field 40221.

The two-dimensional scatter diagram display area 4024 is an area for displaying a scatter diagram plotted based on the feature selected as the feature of the vertical axis and the feature selected as the feature of the horizontal axis. The user can select a point corresponding to each feature in the two-dimensional scatter diagram display area 4024 as an object on the display screen 400. In the two-dimensional scatter diagram display area 4024, for example, an object O1 and an object O2 are illustrated.

The time axis scatter diagram display area 4025 is a scatter diagram in which the feature selected as the feature of the vertical axis is plotted with the horizontal axis as the time axis. The user can select a point corresponding to a feature in the time axis scatter diagram display area 4025 as an object on the display screen 400. In the time axis scatter diagram display area 4025, for example, an object O3 and an object O4 are illustrated.

The column label input area 4026 receives an input of a column label for each feature displayed in the second list 4023. The second list 4023 is updated based on the column label input to the column label input area 4026.

The row label input area 4027 receives, from the user, an input of a row label for a feature. The user can update the row label corresponding to the feature in the storage unit 101 by inputting the row label in the row label input field 40271 and selecting the registration button 40272.

The selection display area 403 is an area for enabling the user to select a feature through selection processing described below. The selection display area 403 will be described below.

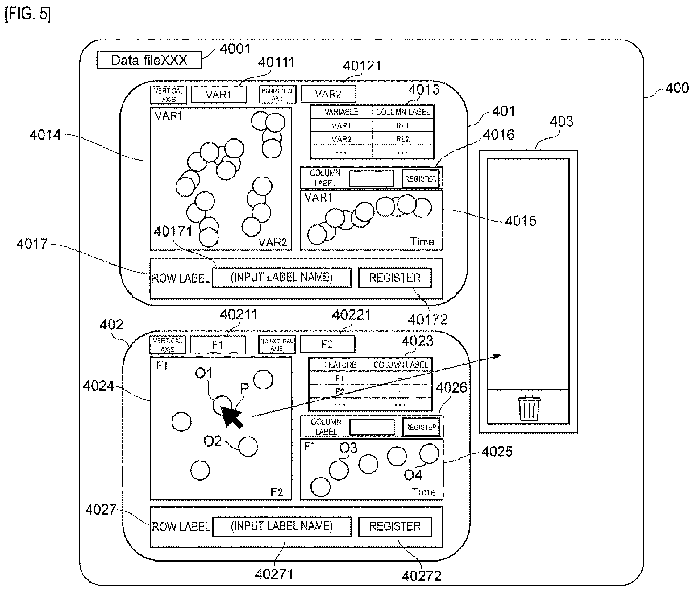

Referring back to FIG. 3, in step S305, the selection reception unit 1055 receives, from the user, a selection of an object corresponding to a feature displayed in the feature display area 402. For example, as illustrated in FIG. 5, the user selects the object O1 using a pointer P controlled by the operation unit 104. The user can perform this operation by operating a mouse, for example. The user can select the object O1 by moving the pointer P onto the object O1 and clicking the object O1.

In step S306, the selection reception unit 1055 determines a feature corresponding to the object disposed in the selection display area on the display screen. Specifically, the selection reception unit 1055 detects that the object O1 selected using the pointer P illustrated in FIG. 5 is dragged and dropped to the selection display area 403, and detects that the object is disposed in the selection display area on the display screen. Next, the selection reception unit 1055 determines the feature corresponding to the object.

In step S307, the screen generation unit 1056 determines target data corresponding to the determined feature.

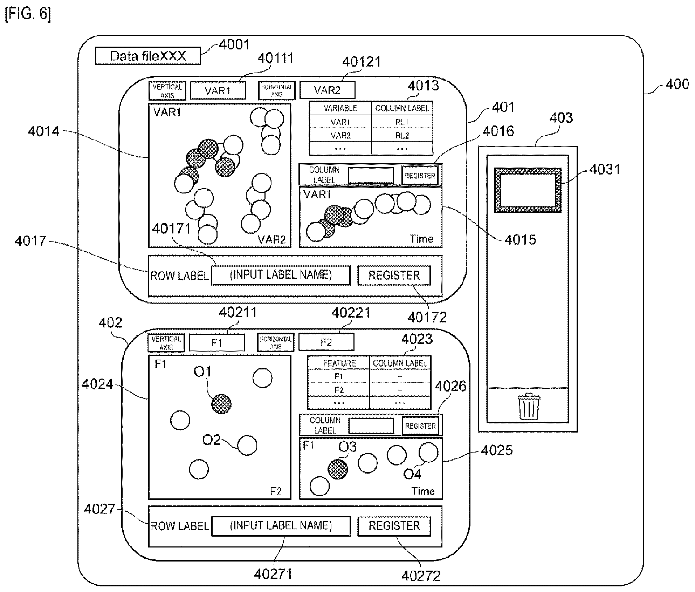

In step S308, the screen generation unit 1056 updates the display screen so as to display a set of the determined feature and the target data corresponding to the feature in an identifiable manner. Specifically, as illustrated in FIG. 6, an object 4031 is displayed in the selection display area 403, and information corresponding to the object 4031 is displayed in association with the feature in the feature display area 402 and the target data in the target data display area 401. In the example of FIG. 6, the feature and the target data in the display mode indicated by the object 4031 are displayed as one set in an identifiable manner. By performing display in this manner, the user can easily check the correspondence between the feature and the target data. Here, the common display mode of the object and the set of the target data and the feature may be, for example, a mode in which color coding is different for each object and each set. The common display mode may be a mode in which the shape, size, or transparency of a marker for displaying the target data and the feature is different for each set. However, the display mode is not limited thereto.

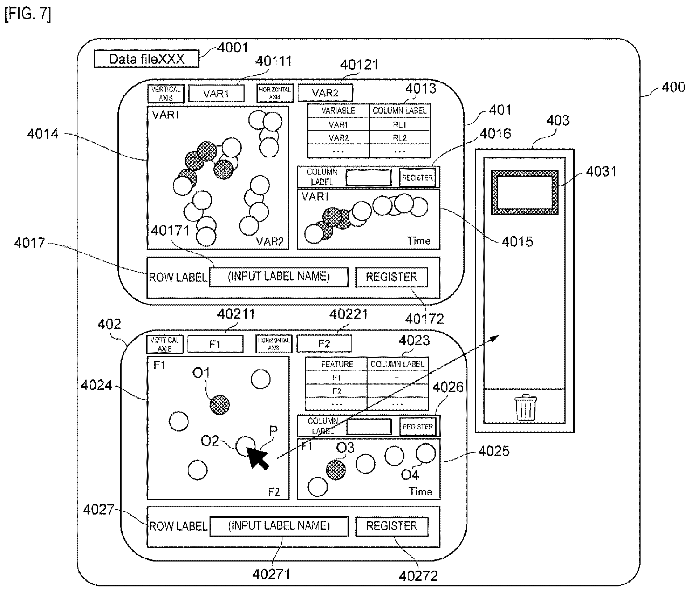

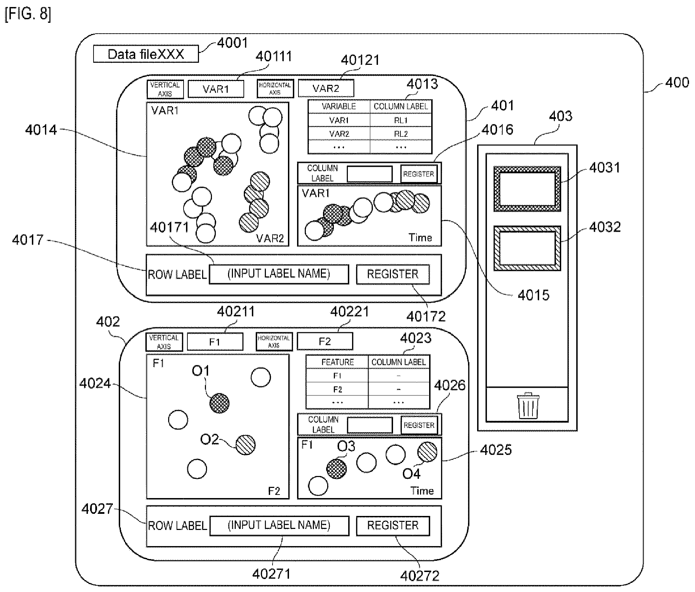

The processing from step S305 to step S308 can be performed at any timing in response to an operation by the user. For example, as illustrated in FIGS. 7 and 8, the object O2 is selected using the pointer P and dragged and dropped to the selection display area 403, and thus an object 4032 corresponding to a feature different from the feature corresponding to the object 4031 is displayed in the selection display area 403. At this time, the feature and the target data corresponding to the object 4032 are displayed in a different display mode (for example, displayed in a different color) from that of the feature and the target data corresponding to the object 4031. Note that an object in the selection display area 403 may be generated by dragging and dropping, to the selection display area 403, another object in the two-dimensional scatter diagram display area 4024 and another object such as the object O3 or the object O4 displayed in the time axis scatter diagram display area 4025.

In this manner, on the display screen 400, the set of the feature and the target data is displayed in an identifiable manner.

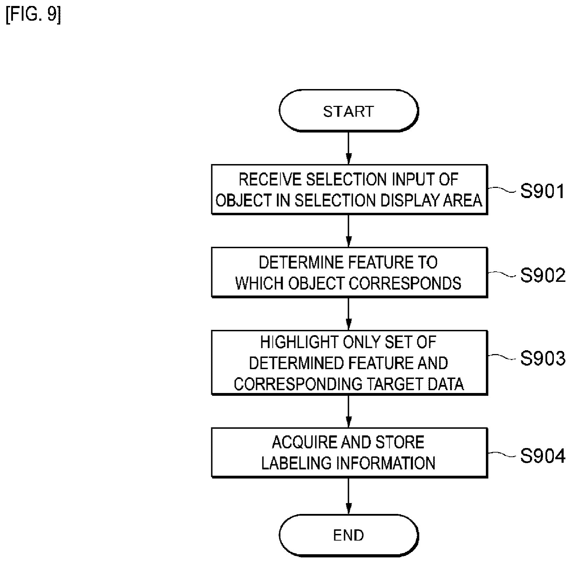

In step S309, the labeling information reception unit 1057 performs labeling information reception processing. The labeling information reception processing will be described with reference to FIGS. 9, 10, and 11.

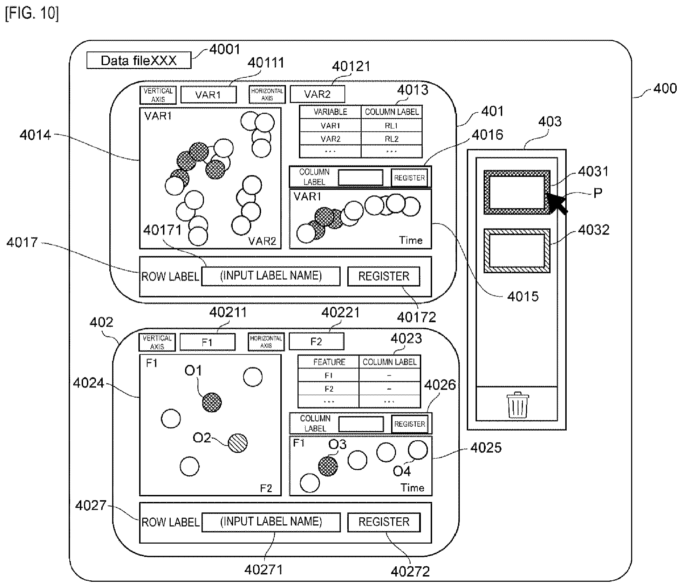

In step S901 in the flowchart illustrated in FIG. 9, the labeling information reception unit 1057 receives a selection input of an object in the selection display area 403. For example, as illustrated in FIG. 10, when the object 4031 is selected using the pointer P, the labeling information reception unit 1057 receives the selection of the object in the selection display area 403.

In step S902, the labeling information reception unit 1057 determines a feature corresponding to the object.

In step S903, the screen generation unit 1056 highlights only the set of the determined feature and corresponding target data. This situation is illustrated, for example, in FIG. 10. Before the object 4031 is selected, the features and the target data corresponding to the object 4031 and the object 4032 are separately colored and displayed as illustrated in, for example, FIG. 8. On the other hand, in the display screen 400 of FIG. 10, only the feature and the target data corresponding to the object 4031 are separately colored and displayed, that is, highlighted.

In step S904, the labeling information reception unit 1057 acquires labeling information and stores the labeling information in the storage unit 101. Specifically, the user browses the display screen 400 in which the set of the feature and the target data is highlighted as illustrated in FIG. 9, and inputs the labeling information in the row label input field 40271. The labeling information reception unit 1057 stores the input labeling information in the storage unit 101 in response to the user selecting the registration button 40272. In the example of FIG. 10, the user inputs "normal" as a row label.

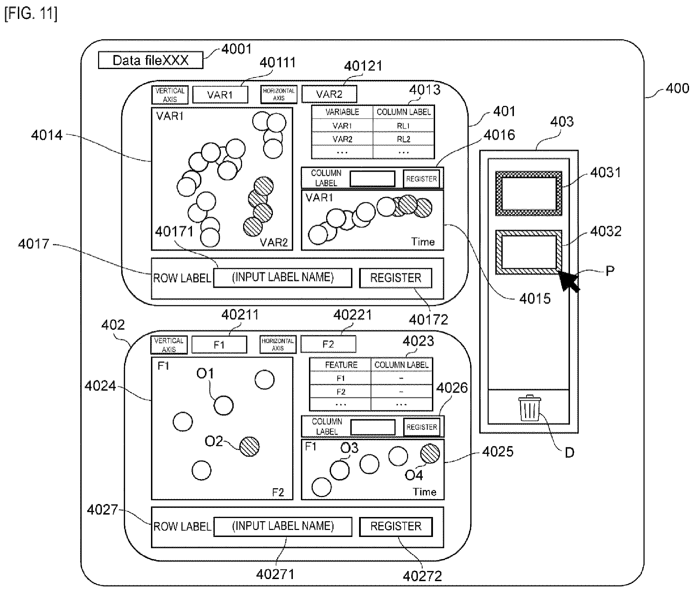

Similarly, as illustrated in FIG. 11, a row label may be input based on the feature and the target data corresponding to the object 4032. The unnecessary object 4031 or the like can be deleted by being dragged and dropped to a deletion area D of the selection display area 403.

In this manner, the information processing device 100 displays the target data corresponding to the feature for which the user wants to input the labeling information, and thus the user can label the feature more accurately.

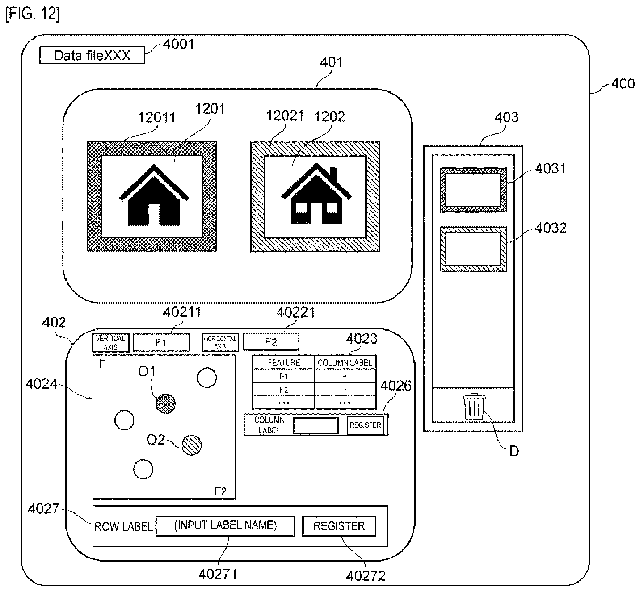

Finally, the display screen 400 when the target data is image data will be described. In FIG. 12, an image 1201 and an image 1202 are displayed as the target data in the target data display area 401. A feature is selected in the same manner as in the case of the time-series data, and an object 4031 and an object 4032 are displayed in the selection display area 403. In the example of FIG. 12, a display frame 12011 and a display frame 12012 are provided so as to correspond to the object 4031 and the object 4032, respectively, in order to identify the images, and sets each of which includes the feature and the target data are displayed in an identifiable manner.

Here, main configurations of the information processing device and the program described above will be summarized.

### Supplementary Note 1

An information processing device including
a target data acquisition unit (1051) configured to acquire a plurality of pieces of target data,
a feature acquisition unit (1052) configured to acquire a plurality of features corresponding to the plurality of pieces of target data,
a selection reception unit (1055) configured to receive selection of at least one feature among the plurality of features, and
a screen generation unit (1056) configured to generate a display screen (400) including a target data display area (401) in which each of the plurality of pieces of target data is displayed and a feature display area (402) in which each of the plurality of features is displayed, the display screen displaying a set of the at least one selected feature and at least one of the plurality of pieces of target data in a manner identifiable to a user, the at least one piece of target data corresponding to the at least one feature.

### Supplementary Note 2

The information processing device according to supplementary note 1, wherein the screen generation unit generates the display screen further including a selection display area (403) in which information indicating the at least one selected feature is displayed.

### Supplementary Note 3

The information processing device according to supplementary note 2, wherein the screen generation unit displays, in the feature display area, a plurality of objects (O1, O2, O3, O4) corresponding to the plurality of features, the plurality of objects being selectable based on operation input from the user in the feature display area, and
on the display screen, an object selected in the feature display area among the plurality of objects is disposed in the selection display area, and thus the selection reception unit receives the selection of the at least one feature.

### Supplementary Note 4

The information processing device according to supplementary note 1, wherein the screen generation unit displays the set in a common display mode, and thus displays the set in an identifiable manner.

### Supplementary Note 5

The information processing device according to any of supplementary notes 1 to 4, further including
a labeling information reception unit (1057) configured to receive, from the user, labeling information for the at least one feature.

### Supplementary Note 6

The information processing device according to any one of supplementary notes 1 to 5, wherein
the target data is time-series data.

### Supplementary Note 7

The information processing device according to any one of supplementary note 1 to 5, wherein
the target data is image data.

### Supplementary Note 8

A program for causing a computer to execute acquiring a plurality of pieces of target data,
acquiring a plurality of features corresponding to the plurality of pieces of target data,
receiving selection of at least one feature among the plurality of features, and generating a display screen including a target data display area in which the plurality of pieces of target data are displayed and a feature display area in which the plurality of features are displayed, the display screen displaying a set of the at least one selected feature and the at least one associated piece of target data in a manner identifiable to a user.

### Supplementary Note 9

An information processing method executed by a computer, the information processing method including
acquiring a plurality of pieces of target data,
acquiring a plurality of features corresponding to the plurality of pieces of target data,
receiving selection of at least one feature among the plurality of features,
associating the at least one feature and at least one piece of the plurality of pieces of target data, the at least one piece of target data corresponding to the at least one feature, and
generating a display screen including a target data display area in which the plurality of pieces of target data are displayed and a feature display area in which the plurality of features are displayed, the display screen displaying a set of the at least one selected feature and the at least one associated piece of target data in a manner identifiable to a user.

### REFERENCE SIGNS LIST

100 Information processing device, 1051 Target data acquisition unit, 1052 Feature acquisition unit, 1053 First list generation unit, 1054 Second list generation unit, 1055 Selection reception unit, 1056 Screen generation unit

## Claims

1. An information processing device comprising:
a target data acquisition unit configured to acquire a plurality of pieces of target data;
a feature acquisition unit configured to acquire a plurality of features corresponding to the plurality of pieces of target data;
a selection reception unit configured to receive selection of at least one feature among the plurality of features; and
a screen generation unit configured to generate a display screen including a target data display area in which the plurality of pieces of target data are displayed and a feature display area in which the plurality of features are displayed, the display screen displaying a set of the at least one selected feature and at least one of the plurality of pieces of target data in a manner identifiable to a user, the at least one piece of target data corresponding to the at least one feature.

2. The information processing device according to claim 1, wherein
the screen generation unit generates the display screen further including a selection display area in which information indicating the at least one selected feature is displayed.

3. The information processing device according to claim 2, wherein
the screen generation unit displays, in the feature display area, a plurality of objects corresponding to the plurality of features, the plurality of objects being selectable based on operation input from the user in the feature display area, and
on the display screen, an object selected in the feature display area among the plurality of objects is disposed in the selection display area, and thus the selection reception unit receives the selection of the at least one feature.

4. The information processing device according to claim 1, wherein
the screen generation unit displays the set in a common display mode, and thus displays the set in an identifiable manner.

5. The information processing device according to claim 1, further comprising:
a labeling information reception unit configured to receive, from the user, labeling information for the at least one feature.

6. The information processing device according to any one of claims 1 to 5, wherein
the target data includes time-series data.

7. The information processing device according to any one of claims 1 to 5, wherein
the target data includes image data.

8. A program for causing a computer to execute:
acquiring a plurality of pieces of target data;
acquiring a plurality of features corresponding to the plurality of pieces of target data;
receiving selection of at least one feature among the plurality of features; and
generating a display screen including a target data display area in which the plurality of pieces of target data are displayed and a feature display area in which the plurality of selected features are displayed, the display screen(400) displaying a set of the at least one feature and the at least one associated piece of target data in a manner identifiable to a user.

9. An information processing method executed by a computer, the information processing method comprising:
acquiring a plurality of pieces of target data;
acquiring a plurality of features corresponding to the plurality of pieces of target data;
receiving selection of at least one feature among the plurality of features; and
generating a display screen including a target data display area in which the plurality of pieces of target data are displayed and a feature display area in which the plurality of selected features are displayed, the display screen displaying a set of the at least one feature and the at least one associated piece of target data in a manner identifiable to a user.
